Europäisches Patentamt

European Patent Office

Office européen des brevets

(11) Veröffentlichungsnummer: **0 100 789**
**B1**

# (12) EUROPÄISCHE PATENTSCHRIFT

(45) Veröffentlichungstag der Patentschrift:
**01.07.87**

(21) Anmeldenummer: **82107486.1**

(22) Anmeldetag: **17.08.82**

(51) Int. Cl.⁴: **B 31 B 1/86,** B 31 B 1/90

(54) **Vorrichtung zum Befestigen von Traggriffen an Plastiktüten.**

(43) Veröffentlichungstag der Anmeldung:
**22.02.84 Patentblatt 84/8**

(45) Bekanntmachung des Hinweises auf die Patenterteilung:
**01.07.87 Patentblatt 87/27**

(84) Benannte Vertragsstaaten:
**CH DE FR IT LI**

(56) Entgegenhaltungen:
**DE-B-1 270 786**
**FR-A-1 459 894**
**FR-A-2 103 714**
**FR-A-2 201 175**
**FR-A-2 278 489**
**FR-A-2 333 642**
**GB-A-1 511 729**
**US-A-2 748 047**

(73) Patentinhaber: **Melita Wernardaki & Co. KG.,
Artemisstrasse 27, Athen- Moskhato (GR)**

(72) Erfinder: **Vernardakis, Nikos, Dr., Artemidos 51,
Ano Voula, Athen (GR)**

(74) Vertreter: **Patentanwälte Beetz sen. - Beetz jun.
Timpe - Siegfried - Schmitt- Fumian,
Steinsdorfstrasse 10, D-8000 München 22 (DE)**

EP 0 100 789 B1

## Beschreibung

Die Erfindung betrifft eine Vorrichtung zum Befestigen von Traggriffen an Plastiktüten unter Verwendung einer plattenförmigen elektrischen Heizeinrichtung, mit welcher vermittels beweglicher Anpreßplatten eine thermoplastische Verbindung zwischen den einzelnen Plastiktüten und den zu befestigenden vorgefertigten Traggriffen zustandekommt.

Eine derartige Vorrichtung zeigt die FR-A-1 459 894. Diese bekannte Maschine arbeitet vollautomatisch, ihr Fertigungsaufwand und damit ihre Kosten sind verhältnismäßig hoch. Deshalb ist eine solche Maschine nur bei sehr hohen Stückzahlen einzusetzen. Die elektrische Heizeinrichtung liegt horizontal und die Anpreßplatten sind vertikal ober- und unterhalb der Heizeinrichtung beweglich. Da die Heizeinrichtung innerhalb der Plastiktüte liegt, ist sie nur schwer zugänglich. Die Flexibilität innerhalb eines Produktionsprozesses ist gering.

Der Erfindung liegt die Aufgabe zugrunde, ausgehend von der vorstehend zitierten Vorrichtung eine Vorrichtung zum Befestigen von Traggriffen an Plastiktüten zu schaffen, die sich durch sehr niedrige Kosten auszeichnet, ein hohes Maß an Flexibilität zur Anpassung an verschiedene Aufträge kleiner Auflage sowie eine hohe Arbeitsgeschwindigkeit aufweist, einfach zu bedienen ist und bei ihrer Wartung keine Probleme aufwirft.

Zur Lösung dieser Aufgabe dienen die im Hauptanspruch angeführten Merkmale. Die Unteransprüche enthalten zweckmäßige weitere Ausbildungen.

Die erfindungsgemäße Vorrichtung arbeitet halbautomatisch. Sie kostet nur einen Bruchteil der vollautomatischen Vorrichtung, weist aber trotzdem eine hohe Arbeitsleistung auf. Manuell erfolgt lediglich das Aufstecken der einzelnen Plastiktüten auf den Halterungen 3 bzw. Paaren von VVorsprüngen 4. Auf diese Weise können ohne weiteres bis zu 1000 Plastiktüten pro Stunde mit entsprechenden Traggriffpaaren versehen werden. Die dabei verwendeten Traggriffe besitzen ein Gewicht von etwa 3,5 g/Paar, so daß durch die Anbringung derartiger Traggriffe das Gewicht der eigentlichen Plastiktüte nur unwesentlich vergrößert wird. Auf der anderen Seite jedoch gestattet das Anbringen derartiger Traggriffe an Plastiktüten eine sehr hohe Belastbarkeit derselben, ohne daß es zu einem ungewünschten Ausreißen der vorgesehenen Grifföffnungen kommt.

Da alle Bauteile der erfindungsgemäßen Vorrichtung frei zugänglich sind, ist sie besonders servicefreundlich.

Die Zeichnungen stellen ein Ausführungsbeispiel der erfindungsgemäßen Vorrichtung dar. Es zeigen:

Fig. 1 eine perspektivische Ansicht,

Fig. 2 eine vergrößerte Teilansicht der in Fig. 1 dargestellten Vorrichtung.

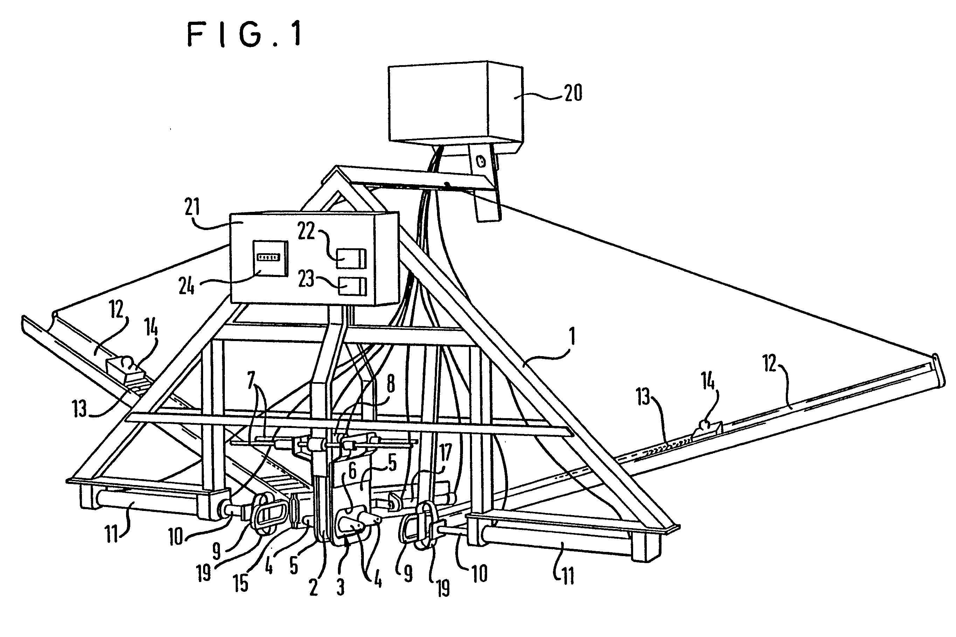

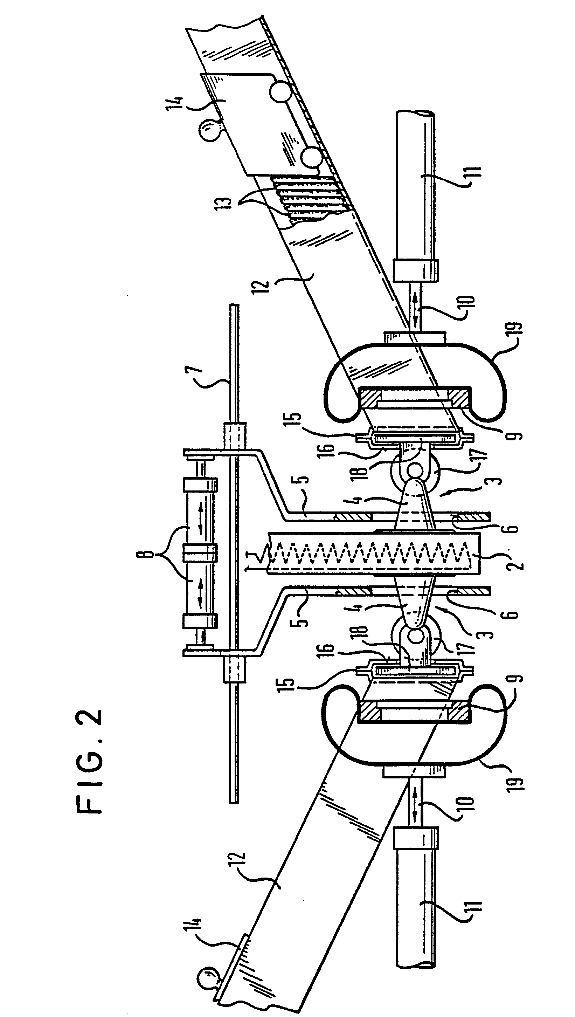

Entsprechend Fig. 1 weist die erfindungsgemäße Vorrichtung einen äußeren starren Rahmen 1 auf, innerhalb welchem eine plattenförmige elektrische Heizeinrichtung 2 in vertikaler Lage gehalten ist. Gemäß Fig. 2 besitzt diese plattenförmige Heizeinrichtung 2 im Bereich ihres unteren Endes beidseitig jeweils eine Halterung 3, die aus zwei in einem vorgegebenen Abstand zueinander angeordneten kegelstumpfförmigen Vorsprüngen 4 bestehen. Diese aus Tetrafluoräthylen bestehenden, hohl ausgebildeten oder eine solche Beschichtung aufweisenden Vorsprünge 4 sind dabei in einem Abstand angeordnet, welcher im wesentlichen der Breite der zu befestigenden Traggriffe 13 entspricht.

Auf beiden Seiten der plattenförmigen Heizeinrichtung 2 befinden sich Abstreifplatten 5, welche im Bereich der auf beiden Seiten vorspringenden Halterungen 3 mit je einer entsprechenden Öffnung 6 versehen sind. Diese Abstreifplatten 5 sind entlang von Stangen 7 derart verschiebbar, daß eine Hin- und Herbewegung der Abstreifplatten 5 in Bezug auf die plattenförmige Heizeinrichtung 2 möglich ist. Die Abstreifplatten 5 sind dabei mit Pneumatikzylindern 8 verbunden, mit welchen eine Hin- und Herbewegung der Abstreifplatten 5 erzielbar ist.

Gegenüberliegend zu den Halterungen 3 bzw. den Paaren von Vorsprüngen 4 sind ringförmige Anpreßplatten 9 vorgesehen, deren Form an die Kontur der zu befestigenden Traggriffe angepaßt ist. Die ringförmigen Anpreßplatten 9 sind dabei unmittelbar an den Kolbenstangen 10 von Pneumatikzylindern 11 befestigt, mit welchen die Anpreßplatten 9 in Richtung der an der Heizeinrichtung 2 vorgesehenen Halterungen 3 bewegbar sind.

Gemäß Fig. 1 besitzt die erfindungsgemäße Vorrichtung zwei schräg zur Mitte hin nach unten geneigte Abgaberinnen 12, welche eine derartige Länge besitzen, daß in jede der Abgaberinnen in etwa 250 Traggriffe 13 einsetzbar sind. Innerhalb der Abgaberinnen 12 sind zudem mit Rollen versehene Gewichte 14 vorgesehen, mit welchen die Traggriffe 13 in Richtung des am unteren Ende der Abgaberinnen 12 vorgesehenen Abgabeendes gedrückt werden.

Gemäß Fig. 2 sind am unteren Ende der Abgaberinnen 12 Führungen 15 mit jeweils einem darin angeordneten rechteckigen Kanal 16 vorgesehen, innerhalb welchem der innerhalb jeder Abgaberinne 12 zu unterst liegende Traggriff 13 mit Hilfe eines Pneumatikzylinders 17 und eines in den Kanal 16 eingreifenden Schiebers 18 in Richtung der ringförmigen Anpreßplatten 9 schiebbar ist. Die Anpreßplatten 9 sind dabei zusätzlich mit Federlamellen 19 versehen, welche der Halterung der von dem Schieber 18 in Richtung der Anpreßplatten 9 geschobenen Traggriffe 13 dienen.

Die Pneumatikzylinder 8, 11 und 17 sind über entsprechende Druckleitungen mit einem in Fig. 1 gezeigten Steuerkasten 20 verbunden, innerhalb welchem eine elektrische Folgesteuerung für die zyklische Ansteuerung der Pneumatikzylinder 8, 11 und 17 erfolgt. Die betreffende Folgesteuerung wird dabei von einer - nicht dargestellten - Druckluftquelle gespeist.

Gemäß Fig. 1 ist zusätzlich ein elektrisches Steuergerät 21 vorgesehen, welches mit Einstellgliedern 22, 23 versehen ist, mit welchen die Temperatur der elektrischen Heizeinrichtung 2 sowie der Druck der innerhalb des Steuerkastens 2 angeordneten Folgesteuerung eingestellt werden kann. Das elektrische Steuergerät 21 ist fernerhin mit einem Zähler 24 versehen, mit welchem die Anzahl der durchgeführten Arbeitszyklen erfaßt werden kann. Das elektrische Steuergerät 21 ist fernerhin über eine elektrische Leitung mit einem nicht dargestellten Hand- oder Fußschalter verbunden, mit welchem jeweils ein neuer Arbeitszyklus der Folgesteuerung ausgelöst werden kann.

Die Funktionsweise der in den Fig. 1 und 2 beschriebenen Vorrichtung ist dabei wie folgt: Nach erfolgter Einstellung der Einstellglieder 22, 23 für die Temperatur der Heizeinrichtung 2 und des Druckes der der Folgesteuerung zugeführten Druckluft und entsprechender Stabilisierung der Temperatur der Heizeinrichtung 2 wird im Hinblick auf eine gewünschte Befestigung von Traggriffen an Plastiktüten zuerst eine - nicht dargestellte - Plastiktüte mit ihren bereits vorgefertigten Griffausschnitten auf die beiden Halterungen 3 aufgesetzt, wobei die Heizeinrichtung 2 im Inneren der Plastiktüte zu liegen gelangt. Die innerhalb der Plastiktüte vorgesehenen zwei Grifföffnungen kommen somit beidseitig auf den Halterungen 3 zu liegen, so daß die Plastiktüte positionsmäßig gut fixiert ist.

Durch Betätigung des - nicht dargestellten - Hand- oder Fußschalters wird dann die innerhalb des Steuerkastens 2 vorgesehene Folgesteuerung in Betrieb gesetzt, wobei gleichzeitig ein Impuls für den innerhalb des elektrischen Steuergerätes 21 angeordneten Zählers 24 erzeugt wird. Beim Anlaufen der Folgesteuerung werden zuerst die in Fig. 2 gezeigten zwei Pneumatikzylinder 17 betätigt, wodurch die innerhalb der schrägen Abgaberinnen 12 zu unterst liegenden Traggriffe 13 durch die innerhalb der Führungen 15 vorgesehenen Kanäle 16 mit den Schiebern 18 in Richtung der Anpreßplatten 9 bewegt werden, welche dieselben mit Hilfe ihrer Federlamellen 19 festhalten.

Durch die innerhalb des Steuerkastens 20 angeordnete Folgesteuerung werden dann die beiden Pneumatikzylinder 11 betätigt, wodurch die mit einer mittigen Öffnung versehenen Anpreßplatten 9 in Richtung der Heizeinrichtung 2 bewegt werden. Durch diese Bewegung erfolgt eine teilweise Freigabe der von den Federlamellen 19 erfaßten Traggriffe 13, so daß diese - nunmehr einzig und allein aufgrund der äußeren Kontur der Anpreßplatten 9 gehalten werden, die gegen die durch die beiden Halterungen 3 bzw. die Paare von Vorsprüngen 4 gehaltene Plastiktüte gedrückt werden. Die Traggriffe 13 sind dabei in Form eines dünnen, der Handform angepaßten Ringes ausgebildet und besitzen im Bereich ihrer Berührfläche mit der Plastiktüte mehrere Reihen von punktweisen Vorsprüngen, welche beim Verschmelzen mit den durch die Heizeinrichtung 2 erwärmten Bereichen der Plastiktüte eine gute Verbindung ergeben.

Nach erfolgter Verschweißung der ringförmigen Traggriffe 13 an der Plastiktüte werden mit Hilfe der innerhalb des Steuerkastens 20 angeordneten Folgesteuerung die beiden Pneumatikzylinder 11 derart betätigt, daß die Anpreßplatten 9 in die in Fig. 2 dargestellte Ausgangsposition zurückgezogen werden, worauf eine Betätigung der Pneumatikzylinder 8 erfolgt, wodurch die entlang der Stangen 7 in seitlicher Richtung verschiebbaren Abstreifplatten 5 von der plattenförmigen Heizeinrichtung 2 weg bewegt werden, was zur Folge hat, daß die mit den Traggriffen 13 versehene Plastiktüte von beiden Seiten her von den Halterungen 3 bzw. den Paaren von Vorsprüngen 4 abgehoben wird, so daß sie unter Schwerkrafteinwirkung nach unten fallen kann. Mit Hilfe der innerhalb des Steuerkastens 20 angeordneten Folgesteuerung werden dann die beiden Pneumatikzylinder 8 derart betätigt, daß die Abstreifplatten 5 erneut in die in Fig. 2 dargestellte Ausgangsposition zurückbewegt werden, wodurch der mit Hilfe der Folgesteuerung durchgeführte Arbeitszyklus für die Befestigung von zwei Traggriffen an einer Plastiktüte beendet ist.

**Patentansprüche**

1. Vorrichtung zum Befestigen von Traggriffen (13) an Plastiktüten unter Verwendung einer plattenförmigen elektrischen Heizeinrichtung (2), mit welcher vermittels beweglicher Anpressplatten (9) eine thermoplastische Verbindung zwischen den einzelnen Plastiktüten und den zu befestigenden vorgefertigten Traggriffen (13) zustandekommt,
dadurch gekennzeichnet,
daß die plattenförmige Heizeinrichtung (2) in vertikaler Lage angeordnet ist,
daß zu beiden Seiten der Heizeinrichtung (2) hin- und herbewegbare Abstreifplatten (5) vorgesehen sind, die mit Öffnungen (6) versehen sind, innerhalb welcher jeweils eine Halterung (3) zu liegen kommt, und
daß die Abstreifplatten (5) bei ihrem Wegbewegen von der Heizeinrichtung (2) eine mit Traggriffen (13) versehene Plastiktüte von den Halterungen (3) abheben, wobei dann die Plastiktüte unter Schwerkraftwirkung nach unten fällt.

2. Vorrichtung nach Anspruch 1,
dadurch gekennzeichnet,
daß die der Positionsfixierung der Plastiktüten dienenden Halterungen (3) jeweils aus zwei kegelstumpfförmigen Vorsprüngen (4) bestehen, welche nach außen hin eine Beschichtung aus Tetrafluoräthylen aufweisen.

3. Vorrichtung nach Anspruch 1 oder 2, dadurch gekennzeichnet, daß zwei schräg angeordnete, der Aufnahme einer Vielzahl von einzelnen Traggriffen (13) dienende Abgaberinnen (12) vorgesehen sind, deren nach einwärts ragende untere Enden im Bereich der beiden Anpreßplatten (9) zu liegen kommen, und daß Führungen (15) mit Kanälen (16) vorgesehen sind, entlang welcher mit Hilfe von Schiebern (18) die jeweils innerhalb der einzelnen Abgaberinnen (12) zuunterst liegenden Traggriffe (13) in Richtung der mit federnden Halteelementen (19) versehenen Anpreßplatten (9) bewegbar sind.

4. Vorrichtung nach einem der vorangegangenen Ansprüche, dadurch gekennzeichnet, daß die Hin- und Herbewegungen der Abstreifplatten (5), der Anpreßplatten (9) und der Schieber (18) mit Hilfe von Druckmittelzylindern (8, 11, 17) erfolgen, welche über eine innerhalb eines Steuerkastens (20) angeordnete Folgesteuerung von einer Druckmittelquelle her gespeist sind.

5. Vorrichtung nach Anspruch 4, dadurch gekennzeichnet, daß die innerhalb des Steuerkastens (20) angeordnete Folgesteuerung derart ausgebildet ist, daß nach anfänglicher Auslösung mit Hilfe eines Hand- oder Fußschalters zuerst eine Betätigung der die Schieber (18) bewegenden Druckmittelzylinder (17) mit folgender Rückführung, anschließend eine Betätigung der die Anpreßplatten (9) bewegenden Druckmittelzylinder (11) mit folgender Rückführung und schließlich eine Betätigung der die Abstreifplatten (5) bewegenden Druckmittelzylinder (8) mit folgender Rückführung zustandekommt.

6. Vorrichtung nach Anspruch 4 oder 5, dadurch gekennzeichnet, daß das verwendete Druckmittel Druckluft ist.

7. Vorrichtung nach einem der Ansprüche 4 bis 6, dadurch gekennzeichnet, daß zusätzlich ein elektrisches Steuergerät (21) vorgesehen ist, welches mit Einstellgliedern (22, 23) für die Temperatur der elektrischen Heizeinrichtung (2) und für den Druck des der Folgesteuerung zugeführten Druckmittels sowie einem Zähler (24) für die Anzahl der durchgeführten Arbeitszyklen versehen ist, und daß das elektrische Steuergerät (21) über eine entsprechende Leitung mit dem Hand- oder Fußschalter verbunden ist, mit welchem jeweils ein erneutes Anlaufen der Folgesteuerung auslösbar ist.

## Claims

1. An apparatus for applying carrying handles (13) to plastic bags by using a plate-shaped electric heating device (2) by means of which a thermoplastic joint between the individual plastic bags and the prefabricated carrying handles (13) to be applied is established with the aid of movable clamping plates (9), characterised in that the plate-shaped heating device (2) is disposed in vertical orientation, that the heating device (2) is provided on either side thereof with reciprocable stripping plates (5) which are provided with openings (6) in which a respective holding device (3) is disposed, and that the stripping plates (5) during their movement away from the heating device (2) lift a plastic bag provided with carrying handles (13) off the holding devices (3), the plastic bag then dropping downward by the action of gravity.

2. An apparatus as claimed in claim 1, characterised in that each of the holding devices (3), which function to fix the position of the plastic bags, consists of two frustoconical projections (4) provided towards the exterior thereof with a tetrafluoroethylene coating.

3. An apparatus as claimed in claim 1 or claim 2, characterised in that two inclined discharge chutes (12) for accommodating a multiplicity of individual carrying handles (13) are provided whose inwardly projecting lower ends are disposed in the region of the two clamping plates (9), and that guide means (15) including passageways (16) are provided along which the respective lowermost carrying handles (13) within the individual discharge chutes (12) may be moved by means of pusher members (18) towards the clamping plates (9), which are provided with resilient holding elements (19).

4. An apparatus as claimed in any of the preceding claims, characterised in that the reciprocating motions of the stripping plates (5), the clamping plates (9) and the pusher members (18) are caused by pressurized-fluid cylinders (8, 11, 17) which are supplied by a source of pressurized fluid through an automatic sequence control disposed within a control box (20).

5. An apparatus as claimed in claim 4, characterised in that the automatic sequence control disposed within the control box (20) is designed in such a way that after initial actuation by means of a hand or foot switch first the pressurized-fluid cylinders (17) for moving the pusher members (18) are actuated and returned and subsequently the pressurized-fluid cylinders (11) for moving the clamping plates (9) are actuated and returned, and finally the pressurized-fluid cylinders (8) for moving the stripping plates (5) are actuated and returned.

6. An apparatus as claimed in claim 4 or claim 5, characterised in that the pressurized fluid is compressed air.

7. An apparatus as claimed in any of the claims 4 to 6, characterised in that additionally an electric control device (21) is provided, including setting elements (22, 23) for setting the temperature of the electric heating device (2) and for setting the pressure of the pressurized fluid supplied to the automatic sequence control, and including a counter (24) for counting the number of performed cycles, and that the electric control device (21) is connected via a corresponding line to the hand or foot switch with which a respective fresh start of the automatic sequence control can be triggered.

**Revendications**

1. Dispositif pour poser des poignées (13) de sacs en plastique en utilisant un dispositif de chauffage électrique (2) en forme de plaque, avec lequel une liaison thermoplastique entre les différents sacs plastiques et les poignées (13) préfabriquées à fixer est réalisée au moyen de plaques de pression mobiles (9), caractérisé en ce que le dispositif de chauffage en forme de plaque (2) est disposé en position verticale,

en ce qu'il est prévu, des deux côtés du dispositif de chauffage (2), des plaques de décrochage (5) comportant des ouvertures (6) à l'intérieur de chacune desquelles vient se placer un support (3) respectif, et

en ce que les plaques de décrochage (5) écartent des supports (3), pendant leur mouvement d'éloignement du dispositif de chauffage (2), un sac en plastique muni de poignées (13), le sac plastique tombant sous l'action de la pesanteur.

2. Dispositif selon la revendication 1, caractérisé en ce que les supports (3) servant à fixer la position des sacs en plastique comprennent chacune deux saillies tronconiques (4) qui comportent un revêtement de tétrafluoréthylène vers l'extérieur.

3. Dispositif selon la revendication 1 ou 2, caractérisé en ce qu'il est prévu deux gouttières de dégagement (12) disposées obliquement, servant à recevoir une pluralité de poignées (13), dont les extrémités inférieures dépassant vers l'intérieur viennent se placer dans la zone des deux plaques de pression (9), et

en ce qu'il est prévu des glissières (15) comportant des conduits (16) le long desquelles les poignées (13) qui sont chaque fois le plus bas à l'intérieur des gouttières de distribution (12) individuelles peuvent être déplacées, au moyen de coulisseaux (18), en direction des plaques de pression (9) comportant des éléments de retenus élastiques (19).

4. Dispositif selon l'une des revendications précédentes, caractérisé en ce que les mouvements de va-et-vient des plaques de décrochage (5), des plaques de pression (9) et des coulisseaux (18) sont effectués au moyen de cylindres à fluide sous pression (8, 11, 17) qui sont alimentés à partir d'une source de fluide sous pression par un ensemble de commande séquentiel placé à l'intérieur d'un boîtier de commande (20).

5. Dispositif selon la revendication 4, caractérisé en ce que l'ensemble de commande séquentiel placé à l'intérieur du boîtier de commande (20) est conformé de façon qu'après le déclenchement initial à l'aide d'un commutateur manuel ou commandé au pied, il se produit d'abord un actionnement des cylindres à fluide sous pression (17) déplaçant les coulisseaux (18) avec retour subséquent, puis un actionnement des cylindres à fluide sous pression (11) déplaçant les plaques de pression (9) avec retour subséquent, et enfin un actionnement des cylindres à fluide sous pression (8) déplaçant les plaques de décrochage (9) avec retour subséquent.

6. Dispositif selon la revendication 4 ou 5, caractérisé en ce que le fluide sous pression utilisé est de l'air comprimé.

7. Dispositif selon l'une des revendications 4 à 6, caractérisé en ce qu'il est prévu, en plus, un appareil de commande électrique (21) comportant des organes de réglage (22, 23) pour la température du dispositif de chauffage électrique (2) et pour la pression du fluide sous pression fourni à l'ensemble de commande séquentiel, ainsi qu'un compteur (24) pour le nombre de cycles de fonctionnement effectué, et en ce que l'appareil de commande électrique (21) est relié, par l'intermédiaire d'un conducteur correspondant, au commutateur manuel ou commandé au pied avec lequel on peut déclencher chaque fois un nouveau démarrage de l'ensemble de commande séquentiel.

# FIG.1

0 100 789

FIG. 2

0 100 789